# FASCICULE DE BREVET EUROPEEN

(11) **EP 0 574 298 B1**
(45) Date de publication et mention de la délivrance du brevet: **23.06.1999**
(21) Numéro de dépôt: 93401453.1
(22) Date de dépôt: 08.06.1993
(51) Int. Cl.: H04L 12/18, H04J 13/00

(54) **Réseau local, notamment pour un système de commande et d'auto-surveillance d'un appareil électrique**
Lokales Netzwerk für ein Steuerungs- und Selbstüberwachungssystem eines elektronischen Gerätes
Local network for a system of control and self-monitoring of an electric device

(30) Priorité: 09.06.1992 FR 9206921
(43) Date de publication de la demande: 15.12.1993
(73) Titulaire: GEC ALSTHOM T & D SA, 75116 Paris (FR)
(72) Inventeur: Ebersohl, Gérard, F-69350 La Mulatière (FR)
(74) Mandataire: Gosse, Michel

(56) Documents cités:
- EP-A- 0 112 001
- EP-A- 0 321 203
- DE-A- 3 627 971
- GB-A- 2 183 376
- US-A- 4 991 171
- PATENT ABSTRACTS OF JAPAN vol. 11, no. 280 (E-539)10 Septembre 1987 & JP-A-62 078 931 (NEC CORP.) 11 Avril 1987

## Description

La présente invention concerne un réseau local, utilisable en particulier pour la commande et l'auto-surveillance d'un appareil électrique multipolaire tel qu'un disjoncteur électrique à haute tension.

La Demanderesse a décrit, dans la demande de brevet français FR-A-2 692 885 intitulée "Système de commande et d'autosurveillance, en particulier pour un appareil électrique multipolaire, tel qu'un disjoncteur à haute tension", déposé le même jour que la présente demande de brevet, un système dans lequel chaque pôle de l'appareil est associé à un microprocesseur, les divers microprocesseurs étant reliés par un bus série piloté par un organe de gestion. Le bus possède d'autres abonnés, tel que des organes de mesure ou de contrôle de divers éléments de l'appareil tels que la pression du gaz d'isolement ou la pression de l'huile de la commande hydraulique.

Dans une telle structure, les abonnés, pour pouvoir accomplir leurs différentes tâches d'exécution et de surveillance, ont mutuellement besoin de tout ou partie des informations qu'ils acquièrent ou élaborent, et ceci, en temps réel et en synchronisme aussi parfait que possible; cela garantit qu'à un instant donné, une information partagée entre les stations possède bien la même valeur pour chacun des abonnés. Cette contrainte indique que le réseau local doit permettre la gestion efficace et rapide d'une base de données répartie entre les stations.

Ce concept est remarquablement réalisé par le réseau de terrain F.I.P. permettant l'interconnexion d'un nombre important de stations. Toutefois, ce réseau local dont les fonctionnalités sont très riches (par exemple messagerie) implique une dimension relativement importante des trames échangées, ce qui a pour inconvénient d'engendrer un rendement de transmission trop bas pour les applications envisagées dans la présente demande de brevet; d'autre part, il nécessite une opération préalable de configuration logicielle de chaque station lors de la mise sous tension auxiliaire du réseau, notamment pour désigner les données qu'elle devra produire ou consommer. L'ensemble de ces contraintes rend donc le réseau F.I.P. mal approprié à l'application envisagée par la Demanderesse, car des vitesses de rafraîchissement relativement importantes sont requises pour un petit nombre de données, et le système, non surveillé, doit pouvoir redémarrer rapidement en cas d'incidents sur les sources auxiliaires d'alimentation du réseau local.

Dans tous les cas de figure, le nombre d'abonnés du bus est inférieur à 8.

On connaît de US-A-4 991 171, un réseau conforme au préambule de la revendication 1.

On connaît aussi de GB-A-2 183 376, un système comprenant une base de données avec un processeur et plusieurs stations distantes aptes à recevoir des données diffusées depuis la base de données par radiocommunication en vue de la mise à jour des stations.

On connaît enfin de DE-A-3 627 971, un système de commande de disjoncteurs dans lequel les mécanismes de manoeuvre des disjoncteurs sont reliés par un bus série à une station de commande.

Un but de l'invention est de réaliser un réseau local adapté à un petit nombre d'abonnés, pouvant véhiculer des informations à une cadence convenable, permettant une remise à jour des données selon une fréquence adaptée à la commande et à l'auto-surveillance des disjoncteurs d'un poste électrique à haute tension. Ce but est atteint par un réseau local selon les caractéristiques des revendications.

D'autres particularités de l'invention apparaîtront à la lecture de la description donnée ci-après d'un exemple de réalisation de l'invention, avec référence au dessin annexé dans lequel:
- la figure 1 illustre les adresses des stations comme puits,
- la figure 2 illustre deux exemples de mise en oeuvre de la recherche des stations puits,
- la figure 3 illustre la trame d'un message envoyé par le générateur de requête,
- la figure 4 illustre la trame du message envoyé par une station source en réponse à une requête,
- la figure 5 illustre la trame du message "état des sources" envoyé par le générateur de requêtes après chaque cycle,
- la figure 6 est un schéma montrant commment le réseau de l'invention est utilisé pour la commande et l'auto-surveillance d'un apppareil électrique tripolaire tel qu'un disjoncteur à haute tension isolé à l'hexafluorure de soufre SF6.

On rappelle ici quelques caractéristiques d'un réseau local.

Un réseau local comprend des abonnés ou stations, qui sont des microprocesseurs ou des microcontrôleurs, qui peuvent recevoir des messages (on dit que ces stations sont "puits") ou émettre des messages (on dit que ces stations sont "sources"); certaines stations peuvent être à la fois source et puits, certaines ni source, ni puits.

Un réseau local comporte un générateur de requêtes, émettant, selon une séquence données, des messages en direction des stations; les stations puits et sources reçoivent intégralement la requête et l'exploitent comme suit:
- la station source répond à la requête en émettant la donnée spécifiée,
- la station puits consomme la donnée émise par la station source en réponse à la requête.

Les stations qui ne sont ni source, ni puits ignorent les requêtes. Les informations collectéees à la suite de ces requêtes et des réponses qui y sont fournies sont collectées dans une base de données utilisée par un calculateur pour piloter l'installation industrielle.

Dans le réseau local de l'invention, qui ne comprend au maximum que 8 stations numérotées, les messages proviennent d'une seule source (soit du générateur de requêtes, soit d'une station) mais peuvent avoir jusqu'à 7 puits (la station émettrice n'est pas puits pour le message qu'elle émet; le générateur de requêtes n'est pas puits).

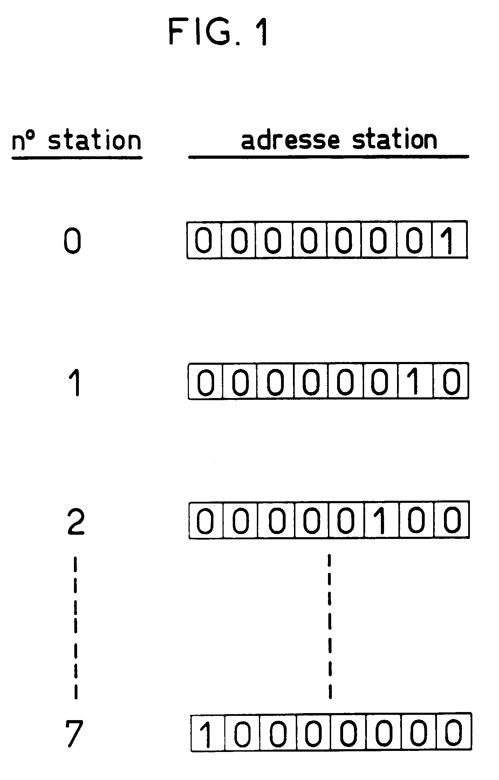

Un premier problème résolu par l'invention est d'identifier de manière simple les stations puits. Conformément à l'invention, et comme le montre la figure 1, l'ensemble des stations puits est identifié par un octet dans lequel l'adresse des diverses stations puits est constituée par les puissances de 2, de la puissance zéro à la puissance 7.

Ainsi:
- l'adresse de la station n°0 est 2 puissance 0 soit 1 (en binaire 1)
- l'adresse de la station n°1 est 2 puissance 1 soit 2 (en binaire 10)
- l'adresse de la station n°2 est 2 puissance 2 soit 4 (en binaire 100)
   .....................................................
- l'adresse de la station n°7 est 2 puissance 7 soit 128 (en binaire 10000000).

En faisant la REUNION à l'aide d'un circuit OU (ou par voie logicielle) des huit adresses précitées, on constitue un mot de 1 octet dans lequel on a désigné l'ensemble des adresses.

Ainsi, conformément à l'invention, la trame de tout message émis par le générateur de requêtes comportera un octet dans lequel figurera l'adresse des stations puits pour ce message. Il suffira à chaque station d'effectuer, à l'aide d'un circuit ET (ou par voie logicielle), l'INTERSECTION bit à bit de cet octet avec l'octet de son adresse pour vérifier si elle est concernée par ce message.

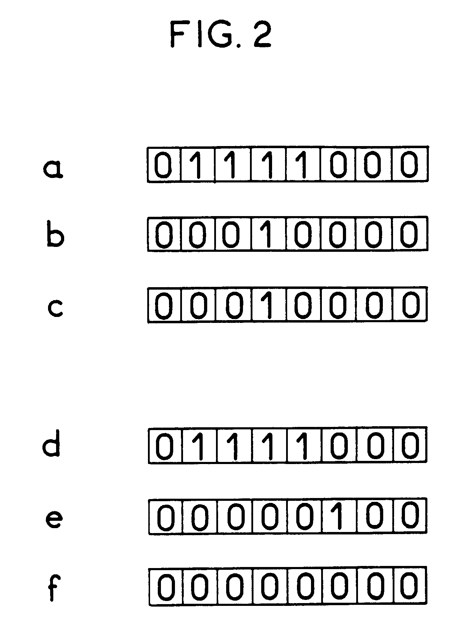

Dans la figure 2, l'octet a est un exemple arbitraire d'un octet identificateur de puits; l'octet b est l'adresse de la station n°4; l'octet c est l'INTERSECTION bit à bit des octets a et b; on voit que cet octet est identique à l'octet b, ce qui montre que la station n°4 est puits pour le message à venir.

L'octet d est le même octet que l'octet a et représente l'identificateur de puits choisi comme exemple; l'octet e est l'adresse de la station n°2; l'octet f est l'INTERSECTION bit à bit des octets e et f; cet octet ne comporte que des 0, ce qui montre que la station n° 2 n'est pas puits pour le message à venir.

Pour identifier les stations source, il suffit de son numéro, ce qui ne requiert que 3 bits pour 8 stations.

Un deuxième problème relatif à la réalisation d'un réseau concerne les caractéristiques de la trame des messages émis par le générateur de requêtes; celle-ci doit être courte, pour permettre une grande fréquence d'émission des messages; mais elle doit contenir toutes les données nécessaires à l'exploitation industrielle du réseau.

La trame du message émis par le générateur de requêtes doit en particulier indiquer quelle station doit être source, donc fournir une donnée, et quelle ou quelles stations doivent être puits, c'est-à-dire consommer cette donnée.

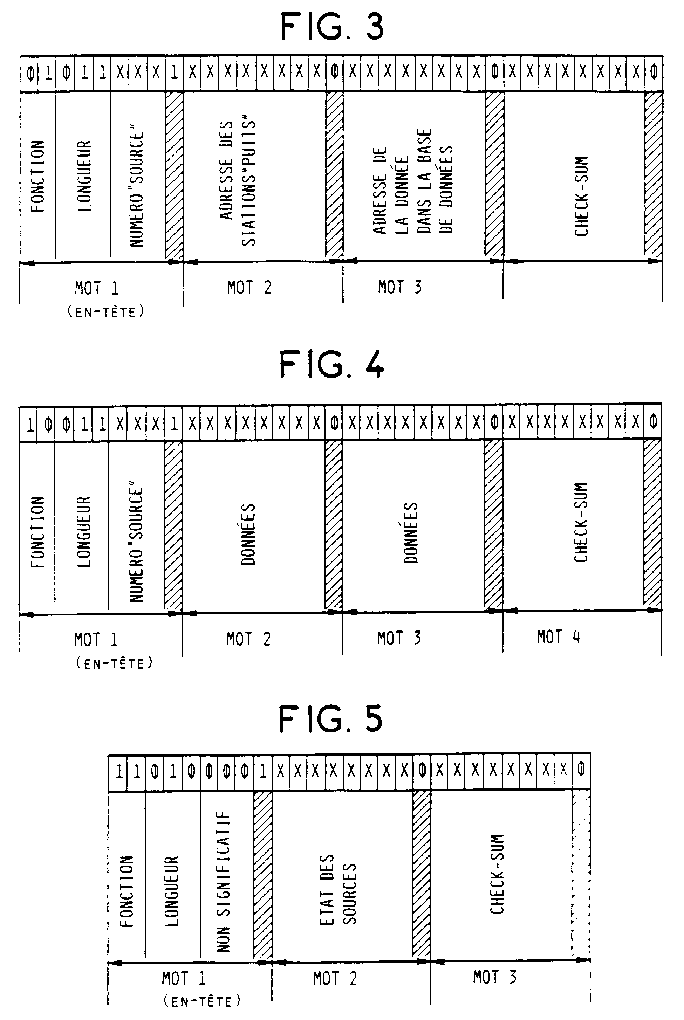

Selon l'invention, la trame du message émis par le générateur de requêtes comprend quatre mots constitués chacun d'un octet et d'un neuvième bit. On se référera à la figure 3, dans laquelle les x indiquent indifféremment un 0 binaire ou un 1 binaire. Les mots sont ainsi composés:

### Premier mot ou en-tête:

- les deux premiers bits indiquent la nature ou la provenance du message; par exemple, le message provenant du générateur de requêtes est identifié par les bits 01.
- les trois bits suivants indiquent le nombre d'octets du message envoyé, en-tête non comprise; ce nombre est ici 3, soit 011 en binaire.
- les trois bits suivants indiquent le numéro de la station source qui est priée d'émettre une donnée.

A la suite de ce premier octet est émis un 9ème bit qui est utilisé selon le protocole dit "du 9ème bit" utilisé entre autres dans les produits commercialisés sous la marque déposée INTEL. Lorsqu'un tel bit est à 1, toutes les stations interrompent leurs travaux en cours et se mettent à l'écoute de la suite du message.

### Deuxième mot

Les huit premiers bits sont constitués par la REUNION des adresses des stations puits, comme il a été indiqué en référence à la figure 2. Le neuvième bit est un zéro.

Toutes les stations qui ne sont ni source, ni puits, donc non intéressées par la suite du message, utilisent la procédure de positionnement à "1" d'un flag de contrôle des interruptions des ports série, connue sous la terminologie SM2 des produits INTEL, pour ne plus être interrompues jusqu'à émission d'un nouvel en-tête.

### Troisième mot

Les huit premiers bits indiquent à quelle adresse relative dans la base de données doit être rangée l'information.

Le neuvième bit est un zéro.

### Quatrième mot

Les huit premiers bits sont utilisés pour établir une somme de contrôle (en anglais "check-sum") qui sera très simplement constituée par l'octet de poids faible de la somme des trois premiers mots. Le neuvième bit est un zéro.

La figure 4 illustre la trame du message émis par une station source en réponse à la requête du générateur de requête. Comme la trame précédente, la trame du message en réponse comporte 4 mots d'un octet suivi d'un neuvième bit.

### Premier mot

Les deux premiers bits servent à identifier qu'il s'agit de la réponse à une requête et qu'une source va émettre une donnée. Les stations puits, qui se sont identifiées lors de l'envoi du message émis par le générateur de requête, se préparent à consommer l'information. Ces deux bits peuvent être par exemple 10.

Les trois bits suivants indiquent le nombre d'octets du message, en-tête non comprise; ce nombre ici est 3, soit 011 en binaire.

Les trois bits suivants indiquent le numéro de la station source.

Le neuvième bit est à 1, en sorte que les stations s'apprêtent à traiter ce message.

### Deuxième et troisième mot

Ils constituent la donnée émise par la source; toutes les données émises par toutes les sources sont formatées à deux mots comportant chacun un octet suivi d'un neuvième bit à zéro. De cette façon, seules les stations puits concernées par cette donnée prennent en compte ces octets et le suivant.

### Quatrième mot

Les huit premiers bits sont utilisés pour réaliser une somme de contrôle qui peut être constituée simplement par l'octet de poids faible de la somme des trois premiers mots. Le neuvième bit est un zéro.

Le fonctionnement du réseau est le suivant, pour un débit en bauds de 375 Kb.

Au moment d'adresser une requête, le générateur de requête ouvre une fenêtre temporelle (délai de surveillance) de durée ds égale par exemple à 600 microsecondes. Dès que le générateur de requête a détecté la réponse de la source interrogée, il émet une nouvelle requête, le bus étant alors libre. Si tout est normal, cette réponse parvient 250 µs après l'ouverture de la fenêtre. Si le générateur ne détecte pas la réponse attendue, il attend la fin du délai de surveillance pour émettre un nouveau message; si la source a bien répondu, le générateur met un bit 1 à l'adresse de cette source dans un message "état des sources" envoyé à toutes les stations après chaque cycle de rafraichissement complet de la base de données. Cet octet, pour lequel toutes les stations sont puits, est rangé en fin de la base de données.

Le message "état des sources" est tramé comme indiqué dans la figure 5.

Il comprend trois mots ayant chacun un octet et un neuvième bit.

### Premier mot ou en-tête

Les deux premiers bits sont utilisés pour indiquer la fonction du message et peuvent être par exemple 11.

Les trois autres bits sont utilisés pour indiquer le nombre d'octets du présent message, en-tête non comprise; ici ce nombre est égal à 2 soit 10 en binaire.

Les trois bits suivant sont sans signification et sont pris égaux à 0.

Le neuvième bit est un 1.

### Deuxième mot

Il décrit l'état des sources, avec un 1 à leur adresse si elle sont saines et un 0 si elles sont défectueuses.

Le neuvième bit est un 0.

### Troisième mot

Il est constitué de l'octet de poids faible de la somme des deux premiers mots pour constituer une somme de contrôle simple.

Le neuvième bit est un 0.

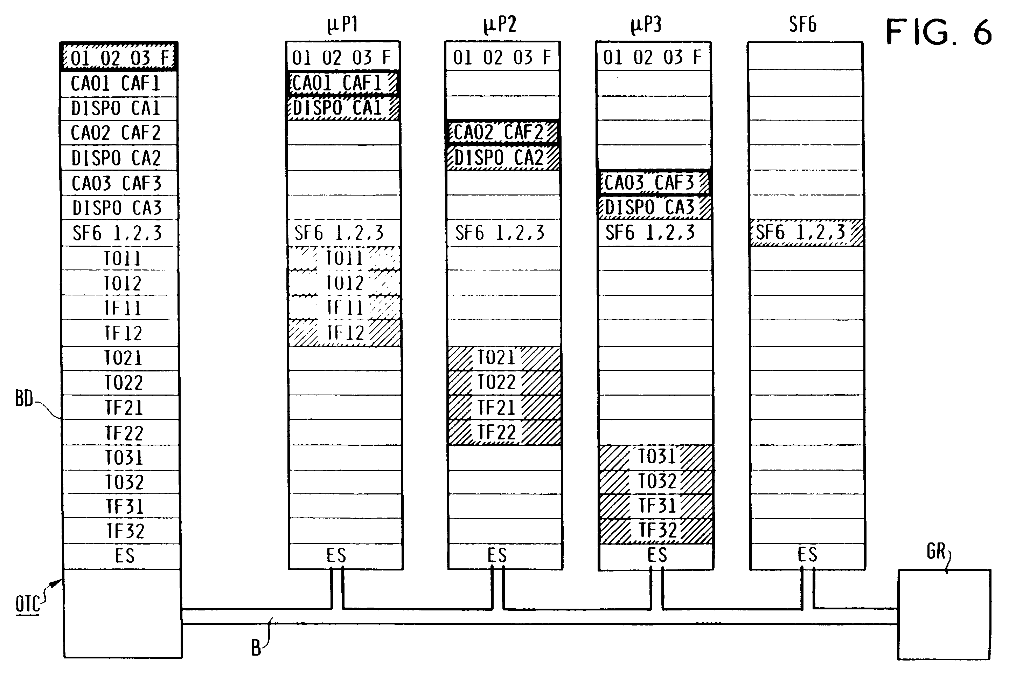

La figure 6 illustre l'application du réseau de l'invention à la commande et à l'auto-surveillance d'un disjoncteur triphasé.

Chacun des pôles est associé à un microcontrôleur qui sont référencés ici µP1, µP2 et µP3.

Les pôles sont reliés en réseau série par un bus B piloté par un générateur de requêtes GR; les données sont adressées à un bornier d'un organe de traitement OTC comportant un registre de données BD recevant les données recueillies par les microcontrôleurs; des organes supplémentaires, tel qu'un détecteur de la pression du gaz d'isolement des pôles, référencé SF6, sont également des abonnés du réseau.

Dans le schéma de la figure 6, on distingue sur fond hachuré les données pour lesquelles les stations (µP1, µP2, µP3, SF6) sont sources; on distingue les données prioritaires (signalées par un trait épais) des données non prioritaires (entourées par un simple trait).

Les données indiquées dans des rectangles blancs sont des données pour lesquelles les stations sont puits; les rectangles restant vide correspondent à des données non consommées par la station.

Les données caractéristiques du fonctionnement d'un disjoncteur sont les suivantes

### Données prioritaires:

O1 O2 03 F désignent les ordres d'ouverture et de fermeture des pôles pour lesquelles la station OTC est source et les stations µP1, µP2 et µP3 sont puits.

CAO1-CAF1 qui sont les données fournies par les contacts auxiliaires ouverture et fermeture du pôle 1, indiquant respectivement une transition du pôle 1 de l'état fermé à l'état ouvert et une transition du pôle 1 de l'état ouvert; µP1 est source de ces données, BD en est puits.

DISPO CA1 qui représente l'état de disponibilité des contacts signaux auxiliaires; cette donnée est élaborée par µP1 à partir des dispositifs d'auto-surveillance attachés aux contacts auxiliaires; OTC est puits pour cette donnée.

CAO2-CAF2 et DISPO CA2 sont les données analogues dont µP2 est source et OTC puits.

CAO3-CAF3 et DISPO CA3 sont les données analogues dont µP3 est source et OTC puits.

### Données non prioritaires

TO11 et TO12 sont des durées relatives à l'ouverture du pôle 1; TO11 est la durée qui s'écoule entre le moment où l'ordre d'ouverture est donné et le moment où le contact auxiliaire d'ouverture détecte le changement de position de l'équipage mobile du disjoncteur; TO12 est la durée qui s'écoule entre le moment où le contact auxiliaire d'ouverture constate le mouvement de l'équipage mobile et le moment où le contact de fermeture constate le fin du mouvement. TF11 et TF12 sont des durées analogues mesurées lors d'une opération de fermeture du pôle. µP1 est source de ces 4 données dont OTC est puits.

TO21, TO22, TF21 et TF22 sont des données analogues dont µP2 est source et OTC puits.

TO31, TO32, TF31 et TF32 sont des données analogues dont µP3 est source et OTC puits.

SF6 1,2,3 est une donnée relative à la pression de gaz isolant régnant à l'intérieur des chambres de coupure des pôles; cette donnée est émise par l'organe SF6 et consommée par OTC, µP1, µP2 et µP3.

Le message ES, état des sources, émis par le gestionnaire des requêtes, est consommé par toutes les stations.

Dans un exemple particulier de mise en oeuvre du réseau de l'invention appliqué à la commande et à l'auto-surveillance d'un disjoncteur triphasé, les données prioritaires peuvent être "rafraîchies" dans la base de données BD par exemple toutes les 2,5 millisecondes, les données non prioritaires étant rafraîchies toutes les 50 millisecondes seulement.

Le message état des sources permet d'adopter dans certains cas, une stratégie de repli.

Si, par exemple, un ordre d'ouverture O2 est adressé au microprocesseur µP2, mais que celui-ci constate que la station SF6 est défaillante, alors, le programme de µP2 peut prévoir que le pôle ne sera pas ouvert malgré l'ordre donné, pour éviter la destruction possible de la chambre de coupure; la protection du réseau sera effectuée par une protection plus en amont.

On notera que dans un réseau comme celui qui vient d'être décrit, tous les microcontrôleurs peuvent être doublés par un microcontrôleur associé, pour assurer une redondance sécuritaire.

Ainsi, le microprocesseur µP1 peut être associé à un microcontrôleur µP1*, qui a la même adresse que µP1 et qui est à l'écoute; un logiciel inhibe l'émission de µP1*; si, à la lecture du message ES (état des stations), µP1* constate que µP1 est défaillant, on désinhibe µP1* à l'émission et ce dernier vient se substituer à µP1.

Les microprocesseurs (µP1, µP2, µP3, OTC, SF6) peuvent avantageusement être du type 80C31 de le société INTEL, avec une interface PSD 301-20L.

On notera que pour que le réseau fonctionne plus vite, tous les messages peuvent être préparés par avance et stockés dans les mémoires du générateur de requêtes. Ces messages décrivent toutes les configurations sources et puits constituant un cycle complet de rafraîchissement des données et, de ce fait, aucune oppération de configuration préalable des stations n'est nécessaire avant le démarrage du réseau local.

On observe que le réseau de l'invention est ouvert, et peut recevoir sans difficulté d'autres stations, par exemple une station fournissant une donnée sur la pression hydraulique du fluide des commandes hydrauliques.

L'invention s'applique à tout réseau local de base comprenant au plus huit abonnés. Si ce nombre devait être dépassé, on conçoit que le réseau général peut être organisé en sous-réseaux liés par des passerelles.

Par ailleurs, le système faisant l'objet de l'invention, par des moyens connus tels que la technique portes à "collecteurs ouverts", permet de gérer la connexion physique des stations au bus proprement dit en "OU câblé". Cela est rendu possible car la transmission des télégrammes est réalisé en mode asynchrone en associant à chaque octet un "start bit" et un "stop bit". De la sorte, à l'état d'inactivité des transmetteurs, le bus est au niveau logique "1", grâce à une résistance le connectant au potentiel + 5V, tous les émetteurs inactifs étant en haute impédance.

Grâce à la gestion du réseau, réalisé par le générateur de requêtes, un seul émetteur prend le contrôle du réseau après une requête. Il n'y a donc pas de collisions possibles sur un tel réseau.

Si elle se produisait accidentellement, les trames seraient rejetées par les récepteurs, grâce au contrôle de la "check-sum".

Bien entendu, les moyens sont mis en oeuvre pour permettre le déport des stations, notamment la station OTC, au moyen de fibres optiques.

On notera que la procédure dite du "9ème bit", évoquée plus haut, constitue un moyen précieux pour assurer la synchronisation des trames; une station peut être connectée de ce fait sans difficulté.

On remarquera enfin que les microcontrôleurs associés aux stations peuvent assurer dans la majorité des cas, non seulement l'exécution du protocole de transmission décrit plus haut, mais également le logiciel applicatif lié au poste électrique dans lequel est disposé l'appareil électrique commandé. Cette faculté des microcontrôleurs permet de réduire de manière importante les coûts d'installation et de maintenance des postes électriques équipés de microcontrôleurs reliés par le réseau de l'invention.

## Revendications

1. Réseau local comprenant au plus huit stations (µP1, µP2, µP3, SF6) sources et/ou puits de données reliées par un bus série (B) et fournissant, à une base de données répartie (BD) des données cycliquement renouvelées sous la conduite d'un générateur de requêtes (GR) émettant des requêtes sous forme de messages binaires, l'adresse des stations puits est constituée par des nombres binaires représentant les puissances de 2 de 0 à 7, caractérisé en ce qu'un message binaire émis par le générateur de requête contient les adresses de toutes les stations "puits" pour le message sous la forme d'un octet constitué par la REUNION OU des adresses des stations puits concernées, une station se reconnaissant puits si, en effectuant l'INTERSECTION ET dudit octet et de son propre octet d'adresse, le résultat est non nul,
ledit message émis par le générateur de requêtes comprenant quatre mots constitués chacun d'un octet et d'un neuvième bit,
le premier mot ou en-tête étant un octet comportant deux bits indiquant l'origine du message, trois bits indiquant le nombre d'octets du message, en-tête non comprise, et trois bits indiquant le numéro de la station que le message désigne comme station source de données,
le neuvième bit du premier mot étant un 1, signalant aux stations qu'elles doivent interrompre leur travail et se mettre à l'écoute,
le deuxième mot comprenant un octet constitué de la REUNION OU des adresses des stations puits pour la donnée qui sera fournie par la station désignée comme source,
le troisième mot du message comportant l'adresse de la donnée visée par ce message, dans la base de données,
le quatrième mot étant constitué de l'octet de poids faible de la somme des trois premiers mots, comme somme de contrôle ou check-sum.

2. Réseau local selon la revendication 1, dans lequel le message émis par une station source en réponse à un message émis par le générateur de requêtes comprend quatre mots constitués chacun d'un octet et d'un neuvième bit,
le premier mot ou en-tête comprenant deux bits relatifs à l'identification de la nature du message, trois bits indiquant le nombre d'octets du message, en-tête non comprise, et trois bits donnant le numéro de la station source émettant ce message,
les deuxième et troisième mots sont constitués par la donnée émise par la station source, le quatrième mot étant l'octet de poids faible de la somme des trois premiers mots pour constituer une somme de contrôle.

3. Réseau local selon l'une des revendications 1 et 2, dans lequel le générateur de requêtes adresse périodiquement, à l'ensemble des stations, un message indiquant l'état des sources.

4. Réseau local selon la revendication 3, dans lequel ledit message comprend un octet constitué de "1" binaires à l'adresse des sources lorsque celles-ci sont saines, et de "0" binaires à l'adresse des sources défaillantes.

5. Réseau local selon l'une des revendications 1 à 4 appliqué à la commande et à l'auto-surveillance d'un disjoncteur polyphasé placé dans un poste électrique, dans lequel les stations sont constitués par des microprocesseurs (µP1, µP2, µP3) respectivement affectés à chacun des trois pôles, par des microprocesseurs attachés à la surveillance de paramètres liés au fonctionnement du disjoncteur tel que la pression du gaz d'isolement à l'intérieur des pôles, et par un organe de traitement de données (OTC).

6. Réseau local selon la revendication 5, dans lequel les données fournies par les microprocesseurs de pôles(µP1, µP2, µP3) comprennent les indications (CAO1, CAF1, CAO2, CAF2, CAO3, CAF3) fournies par les contacts auxiliaires d'ouverture et de fermeture, et par les temps de fonctionnement à l'ouverture (TO11, TO12, TO21, TO22, TO31, TO33) et à la fermeture (TF11, TF12, TF21, TF22, TF31, TF32) des pôles.

7. Réseau local selon l'une des revendications 5 et 6, dans lequel les données fournies par l'organe de traitement (OTC) sont constituées par les ordres d'ouverture (O1, O2, O3) et de fermeture (F) des pôles qui sont adressés aux microprocesseurs des pôles (µP1, µP2, µP3).

## Patentansprüche

1. Lokales Netz, das höchstens acht Datenquellen- (µP1, µP2, µP3, SF6) und -senkenstationen umfasst, die durch einen seriellen Bus (B) verbunden sind und einer verteilten Datenbasis (BD) unter Leitung von einem Anfragegenerator (GR), der Anfragen in Form von binären Nachrichten aussendet, zyklisch erneuerte Daten liefern, wobei die Adresse der Senkenstationen aus Binärzahlen besteht, die die Potenzen von 2 von 0 bis 7 darstellen, dadurch gekennzeichnet, dass eine vom Abfragegenerator ausgesandte, binäre Nachricht die Adressen aller "Senken"stationen für die Nachricht in Form eines Oktetts enthält, das aus der ODER-VEREINIGUNG der Adressen der betroffenen Senkenstationen besteht, wobei eine Senkenstation wiedererkannt wird, wenn unter Ausführung der UND-VERKNÜPFUNG des Oktetts und ihrem eigenen Adressenoktett das Ergebnis nicht Null ist,
wobei die vom Abfragegenerator ausgesandte Nachricht vier Wörter umfasst, die jeweils aus einem Oktett und einem neunten Bit bestehen,
wobei das erste Wort oder der Kopf ein Oktett ist, das zwei Bit, die den Ursprung der Nachricht angeben, drei Bit, die die Anzahl der Nachrichtenoktetts angeben,
wobei der Kopf nicht eingeschlossen ist, und drei Bit aufweist, die die Nummer der Station angeben, die die Nachricht als Quellenstation der Daten bezeichnet,
wobei das neunte Bit des ersten Wortes eine 1 ist, das den Stationen signalisiert, dass sie ihre Arbeit unterbrechen und abhören müssen,
wobei das zweite Wort ein Oktett umfasst, das aus der ODER-VEREINIGUNG der Adressen der Senkenstationen für das Datum besteht, das von der als Quelle bezeichneten Station geliefert wird,
wobei das dritte Wort der Nachricht die Adresse des durch diese Nachricht anvisierten Datums in der Datenbasis aufweist,
wobei das vierte Wort aus einem Oktett mit geringem Gewicht der Summe der drei ersten Wörter als Kontrollsumme oder check-sum besteht.

2. Lokales Netz nach Anspruch 1, bei welchem die Nachricht, die von einer Quellenstation in Antwort auf eine vom Abfragegenerator ausgesandte Nachricht ausgesandt wird, vier Wörter umfasst, die jeweils aus einem Oktett und einem neunten Bit bestehen,
wobei das erste Wort oder der Kopf zwei mit der Identifikation der Art der Nachricht verbundene Bit, drei Bit, die die Anzahl von Oktetts der Nachricht angeben, wobei der Kopf nicht eingeschlossen ist, und drei Bit umfasst, die die Nummer der Quellenstation angeben, die diese Nachricht aussendet,
die zweiten und dritten Wörter aus dem von der Quellenstation ausgesandten Datum bestehen,
das vierte Wort das Oktett mit geringem Gewicht der Summe der drei ersten Wörter ist, um eine Kontrollsumme zu bilden.

3. Lokales Netz nach einem der Ansprüche 1 und 2, bei welchem der Abfragegenerator an die Gesamtheit der Stationen periodisch eine Nachricht richtet, die den Zustand der Quellen angibt.

4. Lokales Netz nach Anspruch 3, bei welchem die Nachricht ein Oktett umfasst, das aus binären "1" bei der Adresse der Quellen, wenn diese unbeschädigt sind, und aus binären "0" bei der Adresse von funktionsunfähigen Quellen besteht.

5. Lokales Netz nach einem der Ansprüche 1 bis 4, das bei der Steuerung und Selbstüberwachung eines in einem elektrischen Gerät angeordneten, mehrphasigen Schalters angewendet wird, bei welchem die Stationen aus Mikroprozessoren (µP1, µP2, µP3), die jedem der drei Pole entsprechend zugeordnet sind, aus Mikroprozessoren, die mit der Überwachung von mit der Funktion des Schalters verbundenen Parametern, wie dem Druck des Isoliergases im Inneren der Pole, verbunden sind. und aus einem Datenverarbeitungsorgan (OTC) bestehen.

6. Lokales Netz nach Anspruch 5, bei welchem die von den Polmikroprozessoren (µP1, µP2, µP3) gelieferten Daten Anzeigen (CAO1, CAF1, CAO2, CAF2, CAO3, CAF3) umfassen, die durch die Hilfskontakte zum Öffnen und Schließen und durch die Betriebszeit bei Öffnung (TO11, TO12, TO21, TO22, TO31, TO33) und bei Schließung (TF11, TF12, TF21, TF22, TF31, TF32) der Pole versorgt werden.

7. Lokales Netz nach einem der Ansprüche 5 und 6, bei welchem die vom Verarbeitungsorgan (OTC) gelieferten Daten aus Befehlen zum Öffnen (O1, O2, O3) und Schließen (F) der Pole bestehen, die an die Polmikroprozessoren (µP1, µP2, µP3) gerichtet sind.

## Claims

1. A local network comprising no more than eight stations (µP1, µP2, µP3, SF₆) constituting sources and/or sinks for data, the stations being interconnected by a serial bus (B) and providing data to a distributed database (BD), which data is renewed cyclically under the control of a request generator (GR) that emits requests in the form of binary messages, the addresses of the sink stations are constituted by binary numbers representing powers of 2 in the range 0 to 7, characterized in that a binary message emitted by the request generator contains the addresses of all of the sink stations for the message in the form of a byte constituted by the OR UNION of the addresses of the corresponding sink stations, a station thus observing that it is a sink if it obtains a non-zero result by performing an AND INTERSECTION between said byte and its own address byte, said message emitted by the request generator comprising four words, each constituted by an 8-bit byte plus a 9th bit, the first word or header being a byte having two bits indicating the origin of the message, three bits indicating the number of bytes in the message, not including the header, and three bits indicating the number of the station designated by the message as the data source station, the 9th bit of the first word being a 1, thereby informing the stations that they are to interrupt work and start listening, the second word comprising an 8-bit byte constituted by the OR UNION of the sink station addresses for the data that is to be provided by the station which is designated as being the source, the third word of the message including the address in the database of the data indicated by the message, the fourth word being constituted by the low order byte of the sum of the first three words, thereby providing a checksum.

2. A local network according to claim 1, wherein the message emitted by a source station in response to a message emitted by the request generator comprises four words each constituted by an 8-bit byte plus a 9th bit, the first word or header comprising two bits identifying the nature of the message, three bits indicating the number of bytes in the message, not including the header, and three bits giving the number of the source station emitting the message, the second and third words are [sic] constituted by the data emitted by the source station, the fourth word being the low order byte of the sum of the first three words, thereby constituting a checksum.

3. A local network according to claim 1 or 2, wherein the request generator periodically addresses a message indicating the state of the sources to all of the stations.

4. A local network according to claim 3, wherein said message comprises an 8-bit byte constituted by binary "1" at the address of each source that is in order, and by a binary "0" at the address of each faulty source.

5. A local network according to any one of claims 1 to 4, applied to the control and self-monitoring of a polyphase circuit breaker placed in an electricity station, wherein the stations are constituted by microprocessors (µP1, µP2, µP3) respectively associated with each of the three poles, by microprocessors associated with monitoring parameters relating to the operation of the circuit breaker such as the pressure of insulating gas inside the poles, and by a member for processing data (OTC).

6. A local network according to claim 5, wherein the data provided by the pole microprocessors (µP1, µP2, µP3) comprise information (CAO1, CAF1, CAO2, CAF2, CAO3, CAF3) provided by opened and closed auxiliary contacts, and by the time required for opening (TO11, TO12, TO21, TO22, TO31, TO33) and for closing (TF11, TF12, TF21, TF22, TF31, TF32) of the poles.

7. A local network according to claim 5 or claim 6, wherein the data provided by the processor member (OTC) is constituted by opening orders (O1, O2, O3) and by a closing order (F) applicable to the poles and addressed to the microprocessors of the poles (µP1, µP2, µP3).
